# EUROPEAN PATENT SPECIFICATION

(11) **EP 2 449 185 B1**
(45) Date of publication and mention of the grant of the patent: **07.06.2017**
(21) Application number: 10727662.8
(22) Date of filing: 28.06.2010
(51) Int. Cl.: E04B 1/76, E04F 13/08

(54) **SUPPLEMENTARY INSULATION SYSTEM AND A METHOD FOR INSULATING A FAÇADE**
ZUSÄTZLICHES ISOLIERSYSTEM UND EIN VERFAHREN ZUR ISOLIERUNG EINER FASSADE
SYSTÈME D'ISOLATION SUPPLÉMENTAIRE ET PROCÉDÉ POUR ISOLER UNE FAÇADE

(30) Priority: 29.06.2009 DK 200970043
(43) Date of publication of application: 09.05.2012
(73) Proprietor: Saint-Gobain Isover AB, 267 82 Billesholm (SE)
(72) Inventor: JESSEN, Erling, DK-6100 Haderslev (DK)
(74) Representative: Awapatent AB
(86) International application number: PCT/DK2010/050168
(87) International publication number: WO 2011/000378

(56) References cited:
- WO-A1-99/35350
- WO-A1-2005/071180
- DE-A1- 2 703 493
- DE-U1- 29 604 846
- JP-A- 2000 265 592
- SE-B- 405 028

## Description

The present invention concerns a system for retrofit insulation of an original façade, the system comprises: two or more units, wherein each unit comprises a compressive resistant insulating material secured to at least one load bearing element, comprising a head (105) and a body (106), and each unit having an inner side to be located towards the original façade and an outer side to be located facing away from the original façade, an intermediate insulating material to be located in one or more spaces between said units, and means for securing the system to the original façade.

In view of the climate changes etc. there is an increased focus on energy efficiency in many different areas. One of these areas is energy consumption in buildings. A way to minimize the energy consumption for heating or cooling is by adding a layer of insulation on an original façade of the building. In order to secure the extra layer of insulation to the original façade, different methods are known in the art.

In SE405028 an insulation system is disclosed. The system is based on the use of sandwich studs or low weight composite laths, comprising two load bearing elements, such as wooden beams, between which an insulating material is placed. Between these sandwich studs an intermediate insulating material may be placed.

Usually such sandwich studs are attached to the original façade by screws, nails or spikes, which are penetrating all three layers of the sandwich. With this sandwich element it may, however, be difficult to position a screw straight as intended, since the screw has to enter the softer insulation in the sandwich, briefly after entering the first beam. Another issue is the shearing strength. In wall constructions the shearing forces exerted on the materials are greater than in roofs, because the sandwich studs have to hold a cladding in a vertical position instead of a horizontal or inclined position. This may cause the stud to be torn apart, when the shearing forces exceed the shearing strength of the relatively weak insulating material.

DE 296 04 846 discloses a roof structure in which the body of the load bearing element is inserted between two separate insulating elements.

DE 27 03 493 A1 discloses a structure for attachment of façade cladding.

In view of the above it is an object of the invention to provide a system of the above mentioned type, but with a greater stability and easier attachment when it comes to attaching the units to the original façade.

According to a first aspect of the invention, a system of the above mentioned type comprises all of the features of the preambles of claims 1 and 16 and is characterized in that a cross section of the at least one load bearing element has a T-shaped form supporting the securing means and the body of the load bearing element is placed in a groove of the compressive resistant insulating material. This provides a better support for the securing means, which is supported both by a head and a body of the load bearing T-element before entering the compressive resistant insulating material, which is often softer. Furthermore placing the body of the load bearing element in a groove of the compressive resistant insulating material, gives a uniform transmission of forces and reduces the risk of the compressive resistant insulating material being drawn out of shape under the effects of the wind on the new façade. It furthermore provides a firm grip between the insulating material and load bearing element. For ease of manufacture, the compressive resistant insulating material may be preformed with a groove matching the size and shape of the body and possibly also the head.

According to a preferred embodiment, a cross section of the unit is substantially rectangular. By having a substantially rectangular cross section of the unit, the unit is easy to fit together with e.g. an intermediate insulating material, which may be positioned side by side with the units.

According to another preferred embodiment, the body of the load bearing element is to be substantially perpendicular to the original façade. This provides the unit with an improved stiffness compared to what is known in the art.

According to another embodiment, the body points towards the original façade. This provides the best support for the securing means when the system is secured to the original façade from the outside. When the body points towards the compressive resistant insulating material it further provides the unit with greater shearing strength.

Alternatively when the body points away from the original façade it is possible to use the projecting body, when further layers are added, e.g. for attachment of cladding or a wind barrier. These further layers can be fitted up against the sides of the projecting body thus creating an even surface or new façade. The body may always replace the distance profile usually used between the wind barrier and the cladding.

According to another embodiment the unit comprises two load bearing elements. By having two load bearing elements the unit is more rigid and can for example provide a basis for mounting of a window frame. It furthermore provides the unit with a greater shearing strength as well as a firmer grip of the intermediate insulating material.

A preferred embodiment is the one, where the load bearing element is located at the outer side of the unit and with the body of the load bearing element pointing towards the inner side of the unit, as explained above. The location at the outer side makes it easier to attach the unit to the original façade with e.g. spikes or screws as this provides support from the outer side, from which side one would normally enter/screw in the attachments means. It, however, also means that the primary load bearing capacity of the unit is situated away from the original façade and thus close to the cladding to be borne, which entails a more direct transmission of forces and gives a optimal bending rigidity.

According to another embodiment, the system further comprises one or more cladding members and/or a wind barrier. This allows the new façade to comply with possible local plans as well as providing a moisture and/or weatherproof surface. A local plan is a plan adopted by the local authorities. The local plan sets out the framework of the use, layout and appearance of a specific area.

According to another embodiment, an outer surface of the system is moisture proof. This makes the building able to withstand the effects of water and wind, and makes application of a wind barrier and/or cladding members unnecessary.

According to another embodiment, the compressive resistant insulating material is selected form a group consisting of: mineral wool, glass wool, expanding or extruded polymer or any combination thereof. These materials have good insulating properties with a low heat transmission coefficient (lambda value), preferably below 0.042 W/mK and has a sufficient strength. Instead of comprising a cross section having a T-shaped form, the load bearing element may advantageously comprise a head, a first body and a second body, wherein a cross section of the load bearing element is in shape of a cross. The cross shaped form provides a firm grip of the compressive resistant insulating material on one side, as well as the possibility to leave out the spacing member as the second body can be used as one. This saves time during the construction phase as the unit can be manufactured off site.

According to another embodiment, the compressive resistant insulating material is secured to the load bearing element by gluing or is cast in a mould comprising the at least one load bearing element. This provides a better securing of the compressive resistant insulating material to the load bearing element, than would be provided by the T-shape alone.

According to another embodiment, the means for securing the system to the original façade is selected from a group consisting of screws, bolts, anchors, spikes and nails or any combination thereof. These means allow for easy attachment of the system.

According to another embodiment, the load bearing element is made of a material selected from a group consisting of wood, metal, polymer, concrete, composite, fibre reinforced composite or any combination thereof. Choosing an appropriate material, the load bearing element may be given strength and flexibility that is adapted to the individual construction projects.

According to another embodiment, the intermediate insulating material is self fitting. Hence no cladding, or other attachment means such as screws, is required to keep the intermediate insulating material in place.

According to another embodiment, the intermediate insulating material and the one or more cladding members and/or a wind barrier constitute one element, thus contributing to a moisture proof system as described above. In this way no subsequent wind barrier and/or cladding have to be applied and the element can be made in a factory, which reduces the construction time at the construction site. It furthermore leaves the intermediate insulating material able to withstand water and/or wind even during the construction phase. In this case it will of course also be advantageous to provide a similar surface on the outer side of the units, i.e. on the outer side of the load bearing element or compressive resistant insulating material, whichever is exposed to the exterior.

In order to give the units a sufficient load bearing capacity as a whole, the compressive resistant insulation should preferably have a compression strength at 2% deformation, between 70 - 180 kPa, more preferably between 90-160 kPa and most preferably between 110-140 kPa. A high compression strength gives the unit a higher strength as well as it makes the unit more rigid, thus making it better able to carry the loads transmitted from the new façade cladding.

According to another embodiment, the system further comprises an air gap between said wind barrier and said one or more cladding members, the air gap being created by one or more spacer members or by a projecting body of the T-shaped load bearing element. This creates another layer with an insulating effect and/or allows ventilation and drainage between layers of the new façade.

According to a second aspect of the invention, a method for providing a supplementary insulation of an original façade according to claim 17 is provided. Any feature of the first aspect may be applied to the second aspect. Other objectives, features and advantages of the present invention will appear from the following detailed disclosure, from the attached dependent claims as well as from the drawings.

The invention will now be explained in more detail below by means of examples of embodiments with reference to the drawings, in which
Fig. 1 shows a cross section of an embodiment of the system.
Fig. 2 shows perspective view of an embodiment of the system.
Fig. 3 shows perspective view of another embodiment of the system.
Fig. 4 shows a perspective close up view of the embodiment in fig 1 and 2.
Fig. 5 shows a cross section of a third embodiment.

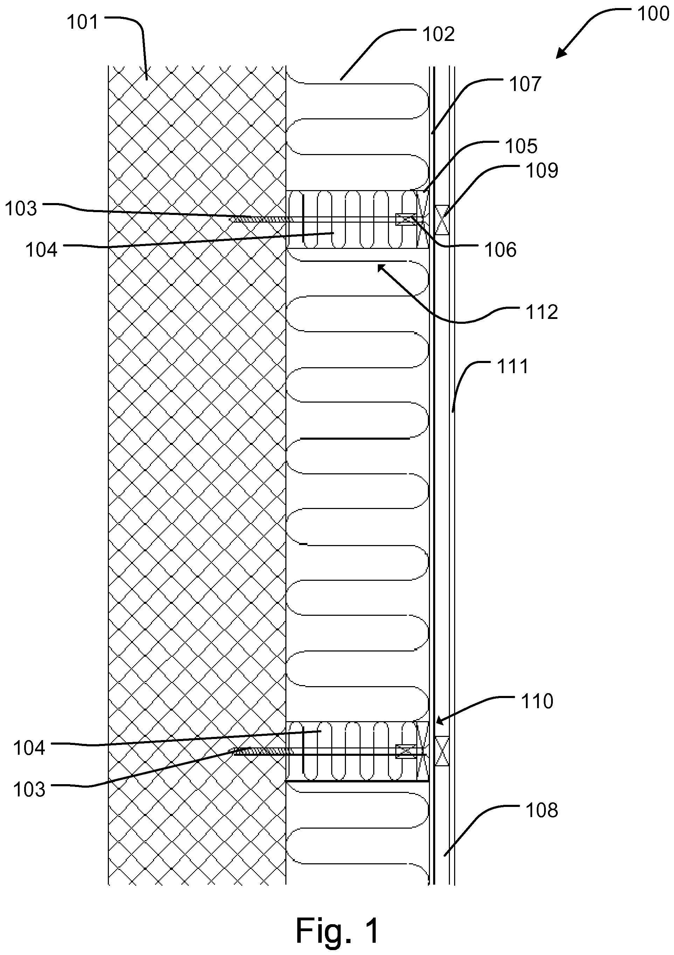

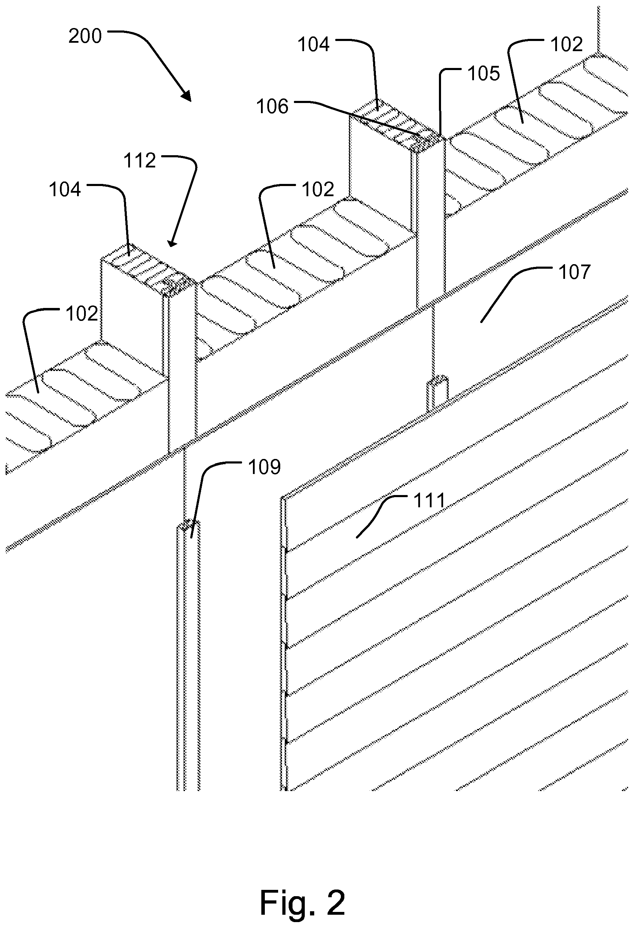

Fig 1 and 2 shows a wall 101 covered with an isolating layer consisting of an intermediate insulation material 102 as well as units 112 according to the invention.

The wall 101 constituting the original façade in this embodiment, may be made out of clay brick, concrete, wood, composite wall, sandwich elements or any other material or combination of materials suitable for an external wall. On the original façade is mounted the units 112, each consisting of a compressive resistant insulating material 104 and a load bearing element 110.

Mineral wool, such as glass wool or stone wool, is preferred as the compressive resistant insulating material 104, but an expanding polymer material that hardens, such as polystyrene or polyurethane, may also be applied. The compressive resistant insulating material 104 is substantially rectangular although possibly provided with groove in which the body 106 of the load bearing element 110 fits.

The units 112 may be secured to the wall 101 with a distance from one unit to another seen perpendicularly to their length axis of 600 - 900 mm, by means of screws, bolts, anchors, spikes and nails or any combination thereof.

The securing means 103 is preferably a screw or bolt, which is taken trough the unit from the outer side as shown in Figs. 1 and 2. They may, however, also be in the shape of a hook or be barbed. For instance the securing means 103 may be attached to the wall 101 first, and then the unit 112 is placed on top of the securing means 103. In this case the securing means 103 could preferably be barbed. The unit 112 may also be predrilled so that the securing means can easily penetrate into it. Another option is that a wall anchor is provided on the wall 101, on which the unit with a predrilled hole can slide over and subsequently be attached to the wall 101 by fixation of the wall anchor or attaching with other secondary fixings.

The outer surface may then be provided with an indentation for housing the nut or other secondary fixing, so that the nut or other secondary fixing is countersunk and does not project over the outer surface. Countersinking may also be used if the unit 112 is attached with a screw or a spike that is entered from the outer side.

The intermediate insulating material 102 is placed between the units 112. The intermediate insulating material 102 could be treated in such a way that it is provided with a weatherproof or wind proof surface and/or that the material is self supporting or self fitting. A suitable intermediate insulating material could be flexible light weight glass wool insulation such as ISOVER Flex®, 16 kg/m³.

As may be seen from Fig. 1 and 2, a wind barrier 107 is placed on top of the intermediate insulating material 102 and the units 112 and secured to the unit 112. On top of the wind barrier 107 spacing members 109 have been placed, providing an air gap 108. The cladding 111 is then attached to the spacing members 109. The spacing members 109 may be made of wood, polymer, a fibre material, such as compressive resistant insulating material, metal, composite or any other suitable material.

The cladding 111 may be any façade cladding material made of wood, metal, glass, composite, clay tile or rendered masonry made by means of mortar and mesh reinforcement.

The air gap 108 may also be left out.

The load bearing element may also be positioned up against the wall 101, with the body pointing away from the wall 101. This is advantageously if the units 112 receive the securing means 103 from the wall 101, e.g. in form of a wall anchor, as this would provide a better support for the securing means 103.

In order to obtain a firmer grip between the compressive resistant insulation material 104 and the load bearing element 110, a profiling of the surface of the load bearing element 110 can also be provided. This provides a greater surface to e.g. apply glue for fixing the compressive resistant insulation material 104 to the load bearing element 110.

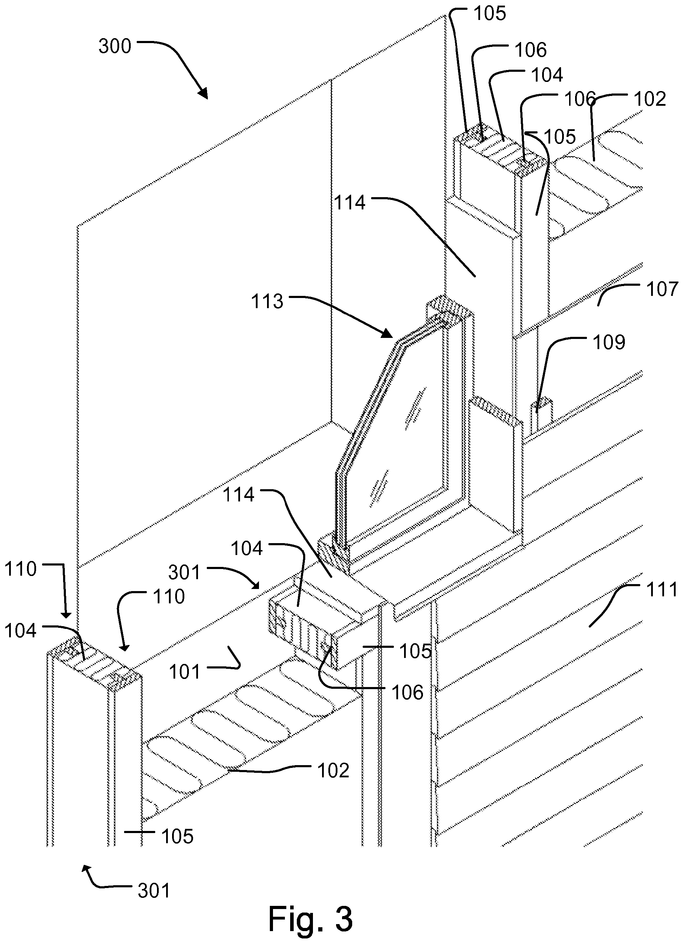

In this embodiment the system is used for a wall 101. Conceivably the system may also be used for supplementary insulation of a roof, a non bearing wall or any other construction, such arrangements not falling within the scope of the present invention. Fig. 3 shows another embodiment of the system. Here the unit 301 is applied both vertically and horizontally. Here the unit 301 has been provided with two load bearing elements 110. This embodiment is advantageous in connection with mounting of window frames, where bearing is required both on the inner and outer side of the unit 301. The unit 301, consisting of a head 105, a body 106 and compressive resistant insulating material 104, has been used as support for mounting a window 113. A plate material 114, such as composite or plywood is mounted on the unit 301. The window 113 is then mounted in substantially airtight connection with the plate material 114.

The construction also comprises a wind barrier 107, spacing members 109 and cladding 111.

The window 113 is allowed to be positioned in the insulation plane to minimise the thermal loss through the assembly between the façade and the window.

Windows and doors in the original façade can be removed late in the construction process, when the new façade has been completed with new windows and doors.

The wind barrier 107 may also be a part of the intermediate insulating material 102. The cladding 111 may also be more or less a part of the intermediate insulating material 102, e.g. if the intermediate insulating material 102 is a sandwich element comprising both a wind barrier 107 and a cladding 111.

A unit 301 comprising one load bearing element 110 may also be used in horizontal applications. The unit 301 with at least one load bearing element 110 may also be used in partition wall constructions.

The body 106 of the load bearing element 110 may point towards and/or away from the original façade. The head 105 of the load bearing element 110 may also be positioned perpendicular to the original façade, e.g. at openings for windows or doors.

In the above the body 106 of the load bearing element 110 has been shown and described as pointing towards the centre of the unit 301. It is, however, to be understood that it may also point away from the compressive resistant insulating material 104 and away from the wall 101. This embodiment allows for an air gap 108 between the intermediate insulating material 102 and the cladding 111 without the use of a spacing member 109.

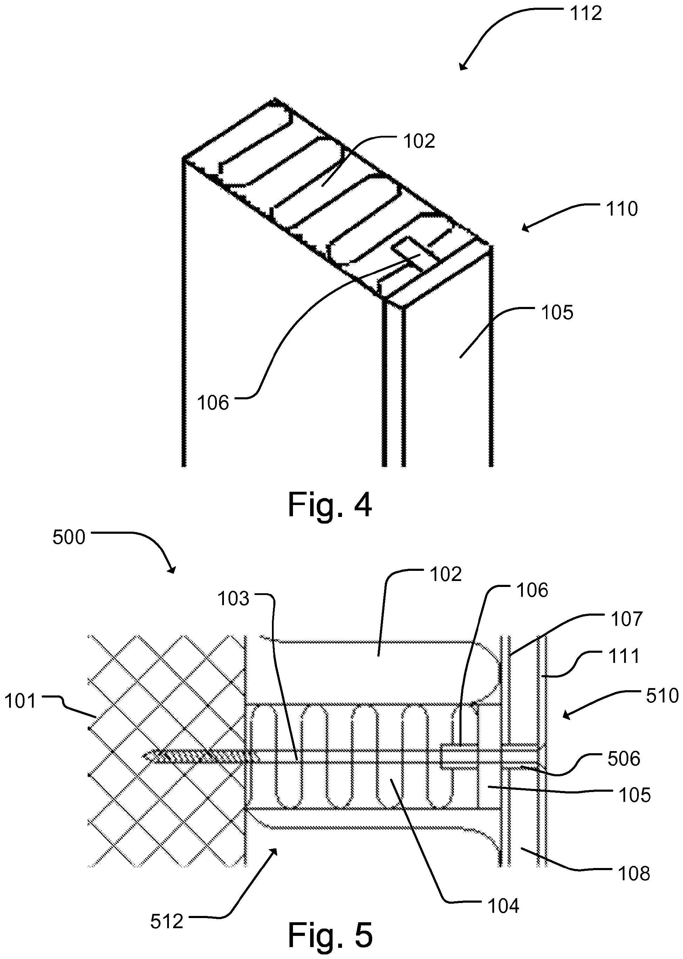

Fig. 4 is a close up view of the unit 112 from figs. 1 and 2. It is more clearly shown that the unit 112 comprise of compressive resistant insulating material 102 and a load bearing element 110. The load bearing element comprise of a head 105 and a body 106.

Fig. 5 shows a third embodiment according to the invention. The load bearing element is here in the form of a cross 510, so that the bodies 106, 506 project from either side of the head 105. The unit 512 comprises the load bearing element in the form of a cross 510 and the compressive resistant insulating material 104. When the load bearing element in form of a cross 510 is positioned away from the wall 101, it allows for an air gap 108 between the intermediate insulating material 102 and the cladding 111 without the use of a spacing member. The thickness of the wind barrier 107 and the air gap 108 correspond to the length of the body 506. The wind barrier is attached to the head on each side of the body 506 and the cladding 111 is attached to the body 506. It allows for a firm grip of the compressive resistant insulating material because a body 106 points towards the compressive resistant insulating material 104. It furthermore has an incorporated spacing member in form of the body 506. This saves time in the construction phase, as no spacing member has to be attached subsequently.

If the load bearing element in form of a cross 510 is positioned towards the wall 101, an air gap is provided between the wall 101 and the extra layers of insulation. It furthermore provides a firm grip of the compressive resistant insulating material 104 because a body 106 points towards the compressive resistant insulating material 104.

When referring to an original façade, it means that it is an existing façade that is being insulated thus creating a new façade. The façade could also be an external or internal wall.

The man skilled in the art will realise that the different elements from the different embodiments may be combined in suitable combinations within the limits defined by the scope of the appended claims.

## Claims

1. A system for supplementary insulation of an original façade (101), the system comprising:
- two or more units (112, 301, 512), wherein each unit (112, 301, 512) comprises a compressive resistant insulating material (104) secured to at least one load bearing element (110), comprising a head (105) and a body (106), and each unit (112, 301, 512) having an inner side adapted to be located towards the original façade (101) and an outer side adapted to be located facing away from the original façade (101),
- an intermediate insulating material (102) adapted to be located in one or more spaces between said units (112, 301, 512),
- means (103) for securing the system to the original façade (101), and
- a cross section of the at least one load bearing element (110) has a T-shaped form supporting the securing means (103), **characterized in that** the body (106) of the load bearing element (110) is placed in a groove of the compressive resistant insulating material (104).

2. The system according to claim 1, wherein a cross section of the unit (112) is substantially rectangular.

3. The system according to claim 1 or 2, wherein the body (106) of the load bearing element (110), is to be substantially perpendicular to the original façade (101).

4. The system according to any one of the proceeding claims, wherein the unit (112, 301, 512) comprises two load bearing elements (110).

5. The system according to any one of the proceeding claims, wherein the load bearing element (110) is located at the outer side of the unit (112, 301, 512) and that the body (106) of the load bearing element (110) points towards the inner side of the unit (112, 301, 512).

6. The system according to any one of the proceeding claims, wherein the compressive resistant insulating material (104) is selected form a group consisting of mineral wool, glass wool, expanding or extruded polymer or any combination thereof.

7. The system according to any one of the proceeding claims, wherein the compressive resistant insulating material (104) is secured to the load bearing element (110) by gluing or is cast in a mould comprising the at least one load bearing element (110).

8. The system according to any one of the proceeding claims, wherein the means for securing the system to the original façade (101) is selected from a group consisting of screws, bolts, anchors, spikes and nails or any combination thereof.

9. The system according to any one of the proceeding claims, wherein the load bearing element (110) is made of a material selected from a group consisting of wood, metal, polymer, concrete, composite, fibre reinforced composite or any combination thereof.

10. The system according to any one of the proceeding claims, wherein an outer surface of the system is moisture proof.

11. The system according to any one of the proceeding claims, wherein the intermediate insulating material (102) is self fitting.

12. The system according to any one of the proceeding claims, wherein the compressive resistant insulating material (104) has a compression strength at 2% deformation, between 70 - 180 kPa, more preferably between 90-160 kPa and most preferably between 110-140 kPa.

13. The system according to any one of the proceeding claims, wherein the compressive resistant insulating material (104) has a heat transmission coefficient below 0.042 W/mK.

14. The system according to any one of the proceeding claims, further comprising one or more cladding members (111) and/or a wind barrier (107).

15. The system according to claim 14, wherein the intermediate insulating material (102) and the one or more cladding members (111) and/or a wind barrier (107) constitute one element.

16. A system for supplementary insulation of an original façade (101), the system comprising:
- two or more units (112, 301, 512), wherein each unit (112, 301, 512) comprises a compressive resistant insulating material (104) secured to at least one load bearing element (110), comprising a head (105), a first body (106) and a second body (506), and each unit (112, 301, 512) having an inner side adapted to be located towards the original façade (101) and an outer side adapted to be located facing away from the original façade (101),
- an intermediate insulating material (102) adapted to be located in one or more spaces between said units (112, 301, 512),
- means (103) for securing the system to the original façade (101),
- **characterized in that** a cross section of the at least one load bearing element (110) has a cross-shaped form supporting the securing means (103) and the first body (106) of the load bearing element (110) is placed in a groove of the compressive resistant insulating material (104).

17. A method for providing a supplementary insulation of any one of claims 1-16 of an original façade (103), the method comprising:
- attaching two or more units (112, 301, 512) having an inner side to be located towards the original façade (101) and an outer side to be located facing away from the original façade (101), wherein each unit (112, 301, 512) comprises a compressive resistant insulating material (104) secured to at least one load bearing element (110) having, in the case of a supplementary insulation according to any of claims 1-15, a T-shaped cross section, or, in the case of a supplementary insulation according to claim 16, a cross-shaped cross section,
- placing an intermediate insulating material (102) in one or more spaces between said units (112, 301, 512), and
- securing the system to the original façade (101) by positioning securing means (103) through the T-shaped or through the cross-shaped cross section.

## Patentansprüche

1. System zur zusätzlichen Isolierung einer ursprünglichen Fassade (101), wobei das System Folgendes umfasst:
- zwei oder mehr Einheiten (112, 301, 512), wobei jede Einheit (112, 301, 512) ein druckfestes Isoliermaterial (104) umfasst, das an mindestens einem tragenden Element (110) gesichert ist, das einen Kopf (105) und einen Körper (106) umfasst, und wobei jede Einheit (112, 301, 512) eine Innenseite aufweist, die so ausgelegt ist, dass sie zur ursprünglichen Fassade (101) hin liegt, und eine Außenseite, die so ausgelegt ist, dass sie von der ursprünglichen Fassade (101) abgewandt liegt,
- ein Zwischenisoliermaterial (102), das so ausgelegt ist, dass es sich in einem oder mehreren Zwischenräumen zwischen den Einheiten (112, 301, 512) befindet,
- ein Mittel (103) zum Sichern des Systems an der ursprünglichen Fassade (101), und
- ein Querschnitt des mindestens einen tragenden Elements (110) eine T-Form aufweist, die das Sicherungsmittel (103) stützt, **dadurch gekennzeichnet, dass** der Körper (106) des tragenden Elements (110) in einer Rille des druckfesten Isoliermaterials (104) platziert ist.

2. System nach Anspruch 1, wobei ein Querschnitt der Einheit (112) im Wesentlichen rechteckig ist.

3. System nach Anspruch 1 oder 2, wobei der Körper (106) des tragenden Elements (110) im Wesentlichen senkrecht zur ursprünglichen Fassade (101) verlaufen soll.

4. System nach einem der vorhergehenden Ansprüche, wobei die Einheit (112, 301, 512) zwei tragende Elemente (110) umfasst.

5. System nach einem der vorhergehenden Ansprüche, wobei sich das tragende Element (110) an der Außenseite der Einheit (112, 301, 512) befindet und der Körper (106) des tragenden Elements (110) zur Innenseite der Einheit (112, 301, 512) hin zeigt.

6. System nach einem der vorhergehenden Ansprüche, wobei das druckfeste Isoliermaterial (104) aus einer Gruppe ausgewählt ist, die aus Mineralwolle, Glaswolle, expandierbarem oder extrudiertem Polymer oder jeder beliebigen Kombination daraus besteht.

7. System nach einem der vorhergehenden Ansprüche, wobei das druckfeste Isoliermaterial (104) am tragenden Element (110) durch Kleben gesichert ist oder in eine Form gegossen ist, die das mindestens eine tragende Element (110) umfasst.

8. System nach einem der vorhergehenden Ansprüche, wobei das Mittel zum Sichern des Systems an der ursprünglichen Fassade (101) aus einer Gruppe ausgewählt ist, die aus Schrauben, Bolzen, Ankern, langen Nägeln, Nägeln oder jeder beliebigen Kombination daraus besteht.

9. System nach einem der vorhergehenden Ansprüche, wobei das tragende Element (110) aus einem Material gefertigt ist, das aus einer Gruppe ausgewählt ist, die aus Holz, Metall, Polymer, Beton, Verbundwerkstoff, faserverstärktem Verbundwerkstoff oder jeder beliebigen Kombination daraus besteht.

10. System nach einem der vorhergehenden Ansprüche, wobei eine Außenfläche des Systems feuchtigkeitsbeständig ist.

11. System nach einem der vorhergehenden Ansprüche, wobei das Zwischenisoliermaterial (102) selbsthaltend ist.

12. System nach einem der vorhergehenden Ansprüche, wobei das druckfeste Isoliermaterial (104) eine Druckfestigkeit bei 2% Verformung von zwischen 70 und 180 kPa, bevorzugter zwischen 90 und 160 kPa und am bevorzugtesten zwischen 110 und 140 kPa aufweist.

13. System nach einem der vorhergehenden Ansprüche, wobei das druckfeste Isoliermaterial (104) eine Wärmeleitzahl von unter 0,042 W/mK aufweist.

14. System nach einem der vorhergehenden Ansprüche, das ferner ein oder mehrere Bekleidungselemente (111) und/oder eine Windsperre (107) umfasst.

15. System nach Anspruch 14, wobei das Zwischenisoliermaterial (102) und das eine oder die mehreren Bekleidungselemente (111) und/oder eine Windsperre (107) ein Element bilden.

16. System zur zusätzlichen Isolierung einer ursprünglichen Fassade (101), wobei das System Folgendes umfasst:
- zwei oder mehr Einheiten (112, 301, 512), wobei jede Einheit (112, 301, 512) ein druckfestes Isoliermaterial (104) umfasst, das an mindestens einem tragenden Element (110) gesichert ist, das einen Kopf (105), einen ersten Körper (106) und einen zweiten Körper (506) umfasst, und wobei jede Einheit (112, 301, 512) eine Innenseite aufweist, die so ausgelegt ist, dass sie zur ursprünglichen Fassade (101) hin liegt, und eine Außenseite, die so ausgelegt ist, dass sie von der ursprünglichen Fassade (101) abgewandt liegt,
- ein Zwischenisoliermaterial (102), das so ausgelegt ist, dass es sich in einem oder mehreren Zwischenräumen zwischen den Einheiten (112, 301, 512) befindet,
- ein Mittel (103) zum Sichern des Systems an der ursprünglichen Fassade (101),
- **dadurch gekennzeichnet, dass** ein Querschnitt des mindestens einen tragenden Elements (110) eine Kreuzform aufweist, die das Sicherungsmittel (103) stützt und der erste Körper (106) des tragenden Elements (110) in einer Rille des druckfesten Isoliermaterials (104) platziert ist.

17. Verfahren zum Bereitstellen einer zusätzlichen Isolierung nach einem der Ansprüche 1 bis 16 einer ursprünglichen Fassade (103), wobei das Verfahren Folgendes umfasst:
- Anbringen von zwei oder mehr Einheiten (112, 301, 512), die eine Innenseite aufweisen, die zur ursprünglichen Fassade (101) hin liegen soll, und eine Außenseite, die von der ursprünglichen Fassade (101) abgewandt liegen soll, wobei jede Einheit (112, 301, 512) ein druckfestes Isoliermaterial (104) umfasst, das an mindestens einem tragenden Element (110) gesichert ist, das, im Falle einer zusätzlichen Isolierung nach einem der Ansprüche 1 bis 15 einen T-förmigen Querschnitt aufweist oder, im Fall einer zusätzlichen Isolierung nach Anspruch 16, einen kreuzförmigen Querschnitt aufweist,
- Platzieren eines Zwischenisoliermaterials (102) in einem oder mehreren Zwischenräumen zwischen den Einheiten (112, 301, 512), und
- Sichern des Systems an der ursprünglichen Fassade (101) durch Platzieren eines Sicherungsmittels (103) durch den T-förmigen oder durch den kreuzförmigen Querschnitt hindurch.

## Revendications

1. Système d'isolation supplémentaire d'une façade originale (101), ce système comprenant :
- deux unités ou plus (112, 301, 512), chaque unité (112, 301, 512) comprenant un matériau isolant résistant à la compression (104) fixé sur au moins un élément porteur de charge (110) comprenant une tête (105) et un corps (106), et chaque unité (112, 301, 512) comportant une face interne apte à être placée tournée vers la façade originale (101) et une face externe apte à être placée détournée de la façade originale (101),
- un matériau isolant intermédiaire (102) apte à être placé dans un ou plusieurs espaces entre lesdites unités (112, 301, 512),
- un moyen (103) de fixation du système à la façade originale (101), and
- une section transversale de l'au moins un élément porteur de charge (110) ayant une forme de T supportant le moyen de fixation (103), **caractérisé en ce que** le corps (106) de l'élément porteur de charge (110) est placé dans une gorge du matériau isolant résistant à la compression (104).

2. Système selon la revendication 1, dans lequel une section transversale de l'unité (112) est sensiblement rectangulaire.

3. Système selon la revendication 1 ou 2, dans lequel le corps (106) de l'élément porteur de charge (110) doit être sensiblement perpendiculaire à la façade originale (101).

4. Système selon l'une quelconque des revendications précédentes, dans lequel l'unité (112, 301, 512) comprend deux éléments porteurs de charge (110).

5. Système selon l'une quelconque des revendications précédentes, dans lequel l'élément porteur de charge (110) est situé sur la face externe de l'unité (112, 301, 512) et que le corps (106) de l'élément porteur de charge (110) pointe vers la face interne de l'unité (112, 301, 512).

6. Système selon l'une quelconque des revendications précédentes, dans lequel le matériau isolant résistant à la compression (104) est composé d'un groupe consistant en laine minérale, laine de verre, polymère expansé ou extrudé ou toutes leurs combinaisons.

7. Système selon l'une quelconque des revendications précédentes, dans lequel le matériau isolant résistant à la compression (104) est fixé à l'élément porteur de charge (110) par collage ou est coulé dans un moule comprenant l'au moins un élément porteur de charge (110).

8. Système selon l'une quelconque des revendications précédentes, dans lequel le moyen de fixation du système à la façade originale (101) est sélectionné dans un groupe composé de vis, boulons, ancrages, pointes, et clous ou toutes leurs combinaisons.

9. Système selon l'une quelconque des revendications précédentes, dans lequel l'élément porteur de charge (110) est composé d'un matériau sélectionné dans un groupe composé de laine, métal, polymère, béton, composite, composite renforcé aux fibres ou toutes leurs combinaisons.

10. Système selon l'une quelconque des revendications précédentes, dans lequel une surface extérieure du système résiste à l'humidité.

11. Système selon l'une quelconque des revendications précédentes, dans lequel le matériau isolant intermédiaire (102) est auto-ajustable.

12. Système selon l'une quelconque des revendications précédentes, dans lequel le matériau isolant résistant à la compression (104) a une résistance à la compression à 2 % de déformation comprise entre 70 et 180 kPa, plus préférentiellement entre 90 et 160 kPa et le plus préférentiellement entre 110 et 140 kPa.

13. Système selon l'une quelconque des revendications précédentes, dans lequel le matériau isolant résistant à la compression (104) a un coefficient de transfert thermique inférieur à 0,042 W/mK.

14. Système selon l'une quelconque des revendications précédentes, comprenant en outre un ou plusieurs éléments de gainage (111) et/ou une barrière pare-vent (107).

15. Système selon la revendication 14, dans lequel le matériau isolant intermédiaire (102) et le ou les plusieurs éléments de gainage (111) et/ou une barrière pare-vent (107) constituent un seul élément.

16. Système d'isolation supplémentaire d'une façade originale (101), ce système comprenant :
- deux unités ou plus (112, 301, 512), chaque unité (112, 301, 512) comprenant un matériau isolant résistant à la compression (104) fixé sur au moins un élément porteur de charge (110) comprenant une tête (105), un premier corps (106) et un second corps (506), et chaque unité (112, 301, 512) comportant une face interne apte à être placée tournée vers la façade originale (101) et une face externe apte à être placée détournée de la façade originale (101),
- un matériau isolant intermédiaire (102) apte à être placé dans un ou plusieurs espaces entre lesdites unités (112, 301, 512),
- un moyen (103) de fixation du système à la façade originale (101),
- **caractérisé en ce qu'**une section transversale de l'au moins un élément porteur de charge (110) a une forme de T supportant le moyen de fixation (103) et que le premier corps (106) de l'élément porteur de charge (110) est placé dans une gorge du matériau isolant résistant à la compression (104).

17. Procédé de réalisation d'une isolation supplémentaire selon l'une quelconque des revendications 1 à 16 d'une façade originale (103), ce procédé comprenant :
- la fixation de deux unités ou plus (112, 301, 512) ayant une face interne tournée vers la façade originale (101) et une face externe détournée de la façade originale (101), dans lequel chaque unité (112, 301, 512) comprend un matériau isolant résistant à la compression (104) fixé à au moins un élément porteur de charge (110) doté, dans le cas d'une isolation supplémentaire selon l'une quelconque des revendications 1 à 15, d'une section transversale en forme de T ou, dans le cas d'une isolation supplémentaire selon la revendication 16, d'une section transversale en forme de croix,
- le placement d'un matériau isolant intermédiaire (102) dans un plusieurs espaces entre lesdites unités (112, 301, 512), et
- la fixation du système à la façade originale (101) en positionnant le moyen de sécurité (103) à travers la section transversale en forme de T ou à travers la section transversale en forme de croix.
